# EUROPEAN PATENT SPECIFICATION

(11) **EP 1 381 069 B1**
(45) Date of publication and mention of the grant of the patent: **18.01.2012**
(21) Application number: 03015784.6
(22) Date of filing: 10.07.2003
(51) Int. Cl.: H02J 7/14, B62J 6/00

(54) **Bicycle power supply with full-wave and half-wave charging elements**
Fahrradstromversorgung mit Vollwellen- und Halbwellen- Ladelementen
Alimentation de puissance pour une bicyclette avec éléments de charge à double et simple alternance

(30) Priority: 11.07.2002 JP 2002202501
(43) Date of publication of application: 14.01.2004
(73) Proprietor: SHIMANO INC., Osaka 590-8577 (JP)
(72) Inventor: Kitamura, Satoshi, Kitakatsuragi-gunn Nara (JP)
(74) Representative: GROSSE SCHUMACHER KNAUER VON HIRSCHHAUSEN

(56) References cited:
- EP-A- 1 129 930
- DE-A1- 3 933 391
- DE-A1- 4 222 994

## Description

### BACKGROUND OF THE INVENTION

The present invention is directed to bicycles and, more particularly, to a charging apparatus that charges with voltage from an alternating current bicycle dynamo.

Automatic transmission shifting devices are commonly provided in newer bicycles. Such bicycles often employ an electrically powered transmission. Accordingly, a dynamo is usually provided for generating electrical power, and a charging system is provided for charging a battery or other voltage storing device used to supply the electrical power to the electrically powered transmission. Since the dynamo generates an alternating current voltage, and since electrically powered transmissions often operate using direct current voltages, half-wave or full-wave rectification of the dynamo output signal usually must be performed.

Voltage generated by the bicycle dynamo increases or decreases depending on bicycle speed, and low voltages typically accompany low speed operation. As a result, electrical devices often cannot be provided with sufficient voltage during low speed operation, thus possibly resulting in malfunction of the devices. This problem could be addressed by expanding the charging capacitor so that the devices would be supplied with adequate voltage even at low speed. However, electric double layer capacitors commonly employed as charging capacitors in such applications are expensive, thus leading to increased cost of the overall system.

### SUMMARY OF THE INVENTION

The present invention is directed to various features of a charging apparatus as defined in claim 1.

### BRIEF DESCRIPTION OF THE DRAWINGS

Fig. 1 is a schematic diagram of a particular embodiment of a charging apparatus that charges with voltage from an alternating current bicycle dynamo;
Fig. 2 is a schematic diagram showing the operation of the charging apparatus during a positive half-cycle of the bicycle dynamo; and
Fig. 3 is a schematic diagram showing the operation of the charging apparatus during a negative half-cycle of the bicycle dynamo.

### DETAILED DESCRIPTION OF THE EMBODIMENTS

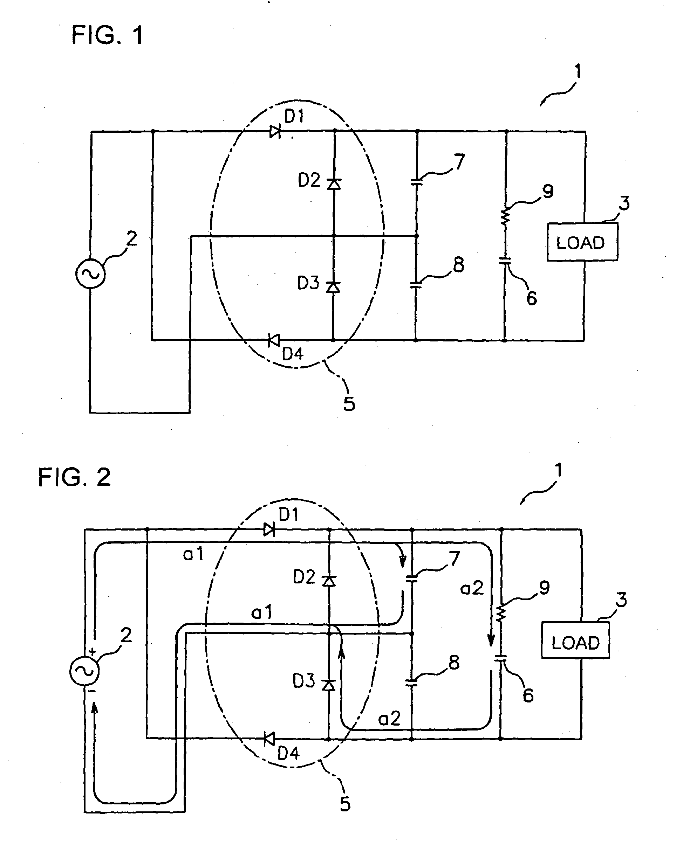

Fig. 1 is a schematic diagram of a particular embodiment of a charging apparatus 1 that charges with voltage from an alternating current bicycle dynamo 2, wherein charging apparatus 1 is connected between dynamo 2 and a load 3. Charging apparatus 1 comprises a full-wave rectifier circuit 5, a full-wave charging element comprising an electric double layer capacitor 6 (which is environmentally friendly), and first and second half-wave charging elements comprising first and second electrolytic capacitors 7 and 8. A resistance 9 is connected in series with electric double layer capacitor 6.

In this embodiment, full-wave rectifier circuit 5 is a bridge rectifier circuit comprising four connected diodes D1, D2, D3, D4. Electric double layer capacitor 6 is connected to the output of full-wave rectifier circuit 5 such that full-wave rectifier circuit 5 charges electric double layer capacitor 6 during the entire sinusoidal cycle of dynamo 2. First and second electrolytic capacitors 7 and 8 are connected in parallel with electric double layer capacitor 6. More specifically, one end of first electrolytic capacitor 7 and the terminal of resistor 9 opposite electric double layer capacitor 6 are connected to a node between diode D1 and diode D2 of full-wave rectifier circuit 5, and at the other end of first electrolytic capacitor 7 is connected to a node between diode D2 and diode D3. One end of second electrolytic capacitor 8 is connected to the node between diode D2 and diode D3, and the other end of second electrolytic capacitor 8 together with the terminal of electric double layer capacitor 6 opposite resistor 9 are connected to a node between diode D3 and diode D4.

During the operation of the bicycle, AC voltage is output from dynamo 2 when dynamo 2 rotates together with the bicycle wheels. During the positive half-cycle of the AC voltage shown in Fig. 2 (when a positive signal is applied to diode D1), electrical current output from a first terminal of dynamo 2 passes through diode D1, through first electrolytic capacitor 7, and to the second terminal of dynamo 2 as shown by path a1. At the same time, current having passed through diode D1 passes through resistance 9 and electric double layer capacitor 6, then passes through diode D3 and to the second terminal of dynamo 2 as shown by path a2 in Fig. 2. The electric double layer capacitor 6 is charged during this time.

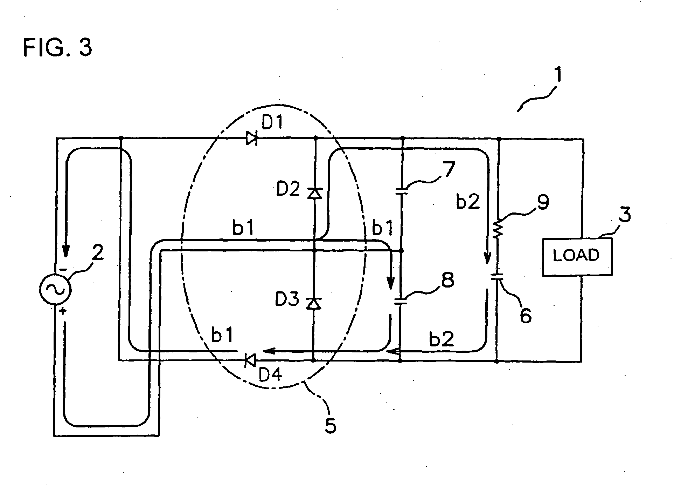

When polarity subsequently reverses during the negative half-cycle of the AC voltage shown in Fig. 3, current output from the second terminal of dynamo 2 passes through second electrolytic capacitor 8, through diode D4 and to the first terminal of dynamo 2 as shown by path b1. The second electrolytic capacitor 8 is charged during this time. At the same time, current having passed through diode D2 passes through resistance 9 and electric double layer capacitor 6, then passes through diode D4 and to the first terminal of dynamo 2 as shown by path b2 in Fig. 3. The electric double layer capacitor 6 is charged during this time. In this negative half-cycle, potential rises at the negative side of first electrolytic capacitor 7, and the charge with which first electrolytic capacitor 7 has been charged flows into electric double layer capacitor 6. As a result, electric double layer capacitor 6 is charged with voltage equal to or greater than the voltage generated by the dynamo 2.

Capacitors 6, 7, and 8 are repeatedly charged by the above-described operation. Electric double layer capacitor 8 is charged to voltage that is double the peak value of the maximum dynamo voltage, thus eliminating the problem of insufficient voltage at low speed (i.e., during low dynamo rotation speed). Additionally, the first and second electrolytic capacitors 7 and 8 are relatively inexpensive, so increased cost of the devices can be avoided.

## Claims

1. A charging apparatus (1) that charges with voltage from an alternating current bicycle dynamo (2), wherein the charging apparatus (1) comprises:
a rectifying circuit (5) for rectifying the alternating current from the bicycle dynamo (2);
a first half-wave charging element (7) operatively coupled to the rectifying circuit (5), wherein the first half-wave charging element (7) charges during positive half-cycles of said dynamo (2); and
a second half-wave charging element (8) operatively coupled to the rectifying circuit (5),
wherein the second half-wave charging element (7) charges during negative half-cycles of the dynamo (2),
**characterized in that** the charging apparatus (1) further comprises a full-wave charging element (6) operatively coupled to the rectifying circuit (5) and in parallel with the first half-wave charging elements (7) and second half-wave charging elements (8) for charging during both positive and negative half-cycles of the bicycle dynamo (2), wherein the first half-wave charging element (7) comprises a first electrolytic capacitor, and the second half-wave charging element (8) comprises a second electrolytic capacitor.

2. The charging apparatus according to claim 1 wherein the full-wave charging element (6) comprises a secondary cell.

3. The charging apparatus according to claim 1 wherein the full-wave charging element (6) comprises an electric double layer capacitor.

4. The charging apparatus according to claim 1 wherein the first electrolytic capacitor is connected in series with the second electrolytic capacitor.

## Patentansprüche

1. Ladevorrichtung (1), die mit einer Spannung von einem Wechselstrom-Fahrraddynamo (2) lädt, wobei die Ladevorrichtung (1) aufweist:
eine Gleichrichterschaltung (5), um den Wechselstrom vom Fahrraddynamo (2) gleichzurichten;
ein erstes Halbwellen-Ladeelement (7), das mit der Gleichrichterschaltung (5) funktionsmäßig verbunden ist, wobei
das erste Halbwellen-Ladeelement (7) während positiven Halbzyklen des Dynamos (2) lädt; und
ein zweites Halbwellen-Ladeelement (8), das mit der Gleichrichterschaltung (5) funktionsmäßig verbunden ist,
wobei das zweite Halbwellen-Ladeelement (7) während negativer Halbzyklen des Dynamos (2) lädt,
**dadurch gekennzeichnet, dass** die Ladevorrichtung (1) weiter ein Vollwellen-Ladeelement (6) aufweist, das mit der Gleichrichterschaltung (5) funktionsmäßig verbunden ist und parallel zu den ersten Halbwellen-Ladeelementen (7) und zweiten Halbwellen-Ladeelementen (8) angeordnet ist, für ein Aufladen während sowohl positiver als auch negativer Halbzyklen des Fahrraddynamos (2), wobei das erste Halbwellen-Ladeelement (7) einen ersten Elektrolytkondensator aufweist, und das zweite Halbwellen-Ladeelement (8) einen zweiten Elektrolytkondensator aufweist.

2. Ladevorrichtung nach Anspruch 1, wobei das Vollwellen-Ladeelement (6) eine Sekundärzelle aufweist.

3. Ladevorrichtung nach Anspruch 1, wobei das Vollwellen-Ladeelement (6) einen elektrischen Doppelschichtkondensator aufweist.

4. Ladevorrichtung nach Anspruch 1, wobei der erste Elektrolytkondensator in Reihe mit dem zweiten Elektrolytkondensator verbunden ist.

## Revendications

1. Chargeur (1), chargeant avec une tension électrique provenant d'une dynamo de bicyclette (2) à courant alternatif, dans lequel le chargeur (1) comprend :
un circuit de redressement (5), pour redresser le courant alternatif provenant de la dynamo de bicyclette (2) ;
un premier élément de charge à simple alternance (7), couplé fonctionnellement au circuit de redressement (5), dans lequel le premier élément de charge à simple alternance (7) charge durant des demi-cycles positifs de ladite dynamo (2) ; et
un deuxième élément de charge à simple alternance (8), couplé fonctionnellement au circuit de redressement (5), dans lequel le deuxième élément de charge à simple alternance (8) charge durant des demi-cycles négatifs de la dynamo (2),
**caractérisé en ce que** le chargeur (1) comprend en outre un élément de charge double alternance (6), couplé fonctionnellement au circuit de redressement (5) et branché en parallèle avec les premiers éléments de charge à simple alternance (7) et deuxièmes éléments de charge à simple alternance (8), pour charger durant à la fois les demi-cycles positifs et négatifs de la dynamo de bicyclette (2), dans lequel le premier élément de charge à simple alternance (7) comprend un premier condensateur électrolytique, et le deuxième élément de charge à simple alternance (8) comprend un deuxième condensateur électrolytique.

2. Chargeur selon la revendication 1, dans lequel l'élément de charge double alternance (6) comprend une cellule secondaire.

3. Chargeur selon la revendication 1, dans lequel l'élément de charge double alternance (6) comprend un condensateur électrique double couche.

4. Chargeur selon la revendication 1, dans lequel le premier condensateur électrolytique est branché en série avec le deuxième condensateur électrolytique.
